# EUROPÄISCHE PATENTSCHRIFT

(11) **EP 1 336 562 B1**
(45) Veröffentlichungstag und Bekanntmachung des Hinweises auf die Patenterteilung: **19.12.2007**
(21) Anmeldenummer: 03002543.1
(22) Anmeldetag: 05.02.2003
(51) Int. Cl.: B64D 9/00

(54) **Riegelelement**
Clamping element
Elément de verrouillage

(30) Priorität: 13.02.2002 DE 10205902
(43) Veröffentlichungstag der Anmeldung: 20.08.2003
(73) Patentinhaber: Telair International GmbH, 83714 Miesbach (DE)
(72) Erfinder: Huber, Thomas, 83727 Schliersee (DE)
(74) Vertreter: Bohnenberger, Johannes

(56) Entgegenhaltungen:
- DE-A- 2 161 735
- DE-A- 3 222 202
- DE-C- 19 544 796

## Beschreibung

Die Erfindung betrifft ein Riegel-Element nach dem Oberbegriff des Patentanspruches 1.

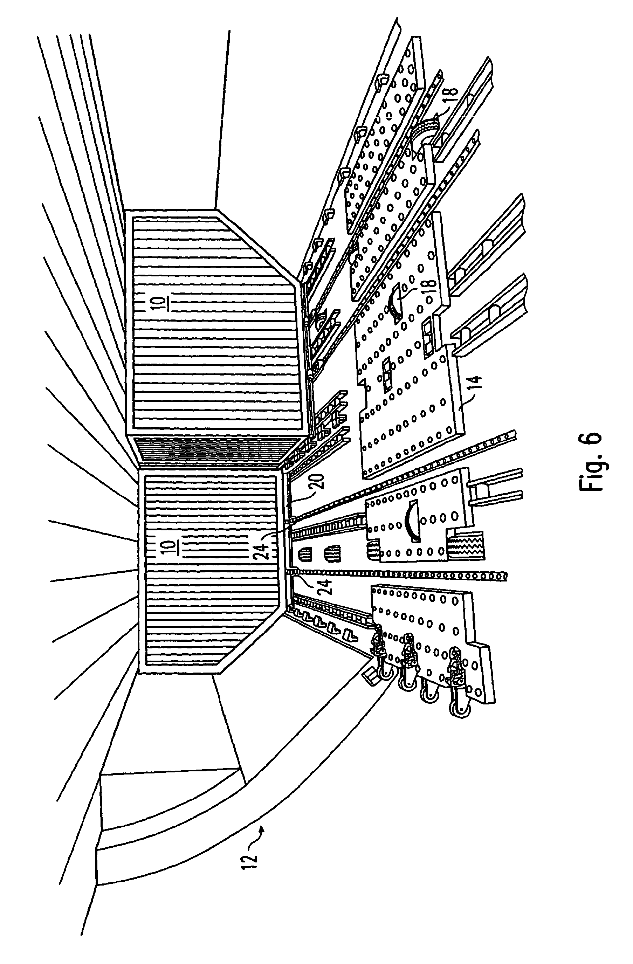

Beim Beladen des Frachtraumes in einem Flugzeug mit Containern, Paletten oder dergleichen Frachtstücken werden die Container in einen Frachtraum des Flugzeugs durch eine Tür 12 hineingefahren, wie dies in der beiliegenden Figur 6 gezeigt ist. Die Container 10 laufen hierbei zunächst auf Kugelmatten 14 in den Frachtraum hinein und zwar angetrieben durch zur Flugzeuglängsachse senkrecht stehende Rollenantriebseinheiten 18 und werden dann auf Rollenbahnen, die in Flugzeuglängsrichtung laufen, an ihren endgültigen Stauplatz gefahren. Dort werden sie an ihren Unterrändern 20 mittels Riegelelementen 24 befestigt. Eine derartige Anordnung ist im Deutschen Patent 2 161 735 gezeigt, wobei die in der Druckschrift beschriebenen Riegelelemente zunächst (von Hand) vor dem Beladen in einen abgesenkten Zustand gebracht werden, damit die Container sie überrollen können und erst dann (manuell) in die Verriegelungsstellung gebracht werden, wenn die Container am richtigen Platz stehen.

Um nun Beschädigungen versehentlich hochstehender Riegelelemente zu vermeiden, sind auch solche Riegelelemente, z.B. aus der DE 195 44 796 C1 oder aus US 5,004,387 bekannt, die beim Überfahren durch einen Container in einer Richtung senkrecht zur Verriegelungsstellung, also senkrecht zu dem Containerrand, an welchem sie eingeklinkt werden, nach unten gedrückt werden.

Besonders kritisch ist der Bereich der Frachtraumtür, da bei längeren Frachtstücken oder auch besonderen Containern diese im Türbereich gedreht und in einer um die Einfahrrichtung um 90° veränderten Richtung weiterbefördert werden müssen. Oft müssen in diesem Bereich auf Grund der Drehbewegung der Frachtstücke die dort vorhandenen Riegelelemente mechanisch in ihrer abgesenkten Ruhestellung fixiert werden.

Weiterhin besteht das Problem, dass beim Be- und Entladen des Frachtraums eines Flugzeuges auf Grund von Schräglagen des Frachtraumbodens oder auf andere Art induzierte, ungewollte Bewegungen der Frachtstücke diese aus dem Frachtraum, durch dessen Tür hinausrollen und so das Beladungspersonal gefährden können.

Der Erfindung liegt die Aufgabe zu Grunde, ein Riegelelement der eingangs genannten Art dahingehend aufzuzeigen, dass eine Erhöhung der Betriebssicherheit beim Beladen eines Flugzeuges erzielt wird.

Diese Aufgabe wird durch ein Riegelelement nach Anspruch 1 gelöst. Eine bevorzugte Verwendung des erfindungsgemäßen Riegelelements ist in Anspruch 6 angegeben.

Insbesondere wird die Erfindung durch ein Riegelelement als Bestandsteil eines Beladungssystems im Frachtraum eines Flugzeugs gelöst, das Rollen- und Kugeleinheiten umfasst, die in oder an einem Boden des Frachtraums so befestigt sind, dass Container, Paletten oder dergleichen Frachtstücke durch eine Tür des Frachtraums durch diesen hineingefahren und an bestimmten Positionen im Frachtraum verankert werden können, wobei das Riegelelement eine Klaue umfasst, die aus einer erhobenen Betriebsstellung, in welcher die Frachtstücke mit der Klaue in sperrenden Eingriff gelangen können, in eine Ruhestellung, in der ein Frachtstück das Riegelelement überfahren kann, durch Rampen, Hebel oder dergleichen mechanische Betätigungseinrichtungen bei einem Anfahren des Frachtstücks absenkbar ist, wobei das Riegelelement derart im Bereich der Tür befestigbar ist, dass beim Anfahren des Frachtstücks aus einer Richtung aus dem Frachtraum durch die Tür die Klaue in der Betriebsstellung verbleibt und sich dadurch auszeichnet, dass die Betätigungseinrichtungen derart an der Klaue angeordnet sind, dass die Klaue ausschließlich beim Anfahren des Frachtstücks aus der Richtung aus dem Frachtraum durch die Tür hinaus in der Betriebsstellung verbleibt, beim Anfahren aus allen anderen Richtungen jedoch in die Ruhestellung abgesenkt wird. Dadurch ist es möglich, derartige Riegelelemente im Bereich (also nicht nur ganz am Rand) der Tür des Frachtraums anzubringen, wobei ein Drehen der Frachtstücke in diesem Bereich die Riegelelemente absenkt, sodass sie nicht beschädigt werden können. Findet jedoch eine Bewegung des Frachtstückes statt, die in Richtung auf die Tür bzw. aus dem Frachtraum hinaus gerichtet ist, so wird das Frachtstück durch die Riegelelemente abgefangen und kann nicht aus dem Frachtraum versehentlich herausrollen.

Vorzugsweise weist die Klaue eine Eingriffsfläche und dieser gegenüberliegend ein Schwenkgelenk derart auf, dass die Eingriffsfläche im Wesentlichen tangential zum Schwenkgelenk von der Betriebsstellung in die Ruhestellung entgegen einer Federkraft absenkbar ist. Durch diese einfache Konstruktion wird eine hohe Stabilität und damit Betriebssicherheit sichergestellt.

Die Klaue weist vorzugsweise eine in der Draufsicht im Wesentlichen rechteckige Kontur mit Schrägflächen auf, die in Richtung auf einen Mittenbereich einer Oberkante der Eingriffsfläche vom Rand her ansteigen. Diese Schrägflächen bieten somit in einfacher Weise eine mechanische Einrichtung,
durch welche die Klaue abgesenkt werden kann, da ein sie (in einer Richtung, anders als die Sperrrichtung) anfahrender Container mit seinem Rand auf die Schrägfläche gelangt und diese entlanggleitend die Klaue absenkt.

Das Riegelelement umfasst einen Sperrmechanismus zum Halten der Klaue in einer Position, die mindestens so tief ist, wie die der Ruhestellung. Wenn man also den Frachtraum entladen will, so klappt man die Klaue ab, sodass in der Ruhestellung des Riegelelementes der Container aus dem Frachtraum herausgefahren werden kann.

Der Sperrmechanismus ist vorzugsweise derart ausgebildet und das Riegelelement derart auf dem Frachtraumboden anbringbar, dass die Kralle dann mit dem Sperrmechanismus in Eingriff gelangt und von diesem bis zu einem Entriegeln des Sperrmechanismus gehalten wird, wenn die Kralle um einen vorbestimmten Betrag von der Betriebsstellung ausgehend tiefer als bis zur Ruhestellung gedrückt wird. Dadurch wird in einfacher Weise sichergestellt, dass die Klaue nicht bei einem (versehentlichen) Anfahren durch ein Frachtstück und damit Absenken zur Vermeidung einer Beschädigung in ihre Ruhestellung gebracht und dort fixiert werden kann.

Von besonderem Vorteil ist es, wenn das erfindungsgemäße Riegelelement in einem Beladungssystem im Frachtraum eines Flugzeuges verwendet wird, in welchem Container, Paletten oder dergleichen Frachtstücke durch eine Tür des Frachtraums in diesen auf einen Frachtraumboden hineingefahren werden können. Hierbei umfasst das Riegelelement eine durch Rampen, Hebel oder dergleichen Betätigungseinrichtungen derart betätigbare Klaue, dass diese aus einer erhobenen Betriebsstellung in welchem die Frachtstücke mit der Klaue in sperrenden Eingriff gelangen können, in eine Ruhestellung absenkbar ist, in der ein Frachtstück das Riegelelement überfahren kann, wobei die Betätigungseinrichtungen derart ausgebildet und das Riegelelement derart in dem Bereich der Tür befestigbar ist, dass beim Anfahren des Frachtstücks aus einer Richtung aus dem Frachtraum durch die Tür die Klaue in der Betriebsstellung verbleibt, beim Anfahren aus allen anderen Richtungen in die Ruhestellung abgesenkt wird. Eine derartige Sicherung bringt ersichtlich große Vorteile mit sich.

Nachfolgend wird die Erfindung anhand von Abbildungen näher erläutert. Hierbei zeigen
Figur 1 eine perspektivische Darstellung eines Riegelelements in seiner hochgehobenen Betriebsstellung,
Figur 2 eine perspektivische Darstellung des Riegelelementes in seiner abgesenkten Ruhestellung,
Figur 3 eine Seitenansicht des Riegelelementes in seiner niedrigsten, mechanisch verriegelten Position,
Figur 4 eine Seitenansicht des Riegelelementes in seiner niedrigsten zu überfahrenden Position, in der es noch nicht verriegelt ist,
Figur 5 eine Seitenansicht des Riegelelementes in seiner (höchsten) Betriebsstellung und
Figur 6 eine perspektivische Darstellung eines Frachtraums, wie er allgemein bekannt ist.

In der nachfolgenden Beschreibung werden für gleiche und gleichwirkende Teile dieselben Bezugsziffern verwendet.

Das Riegelelement 22 umfasst eine Klaue 30, die an einer Basis 45 über ein Schwenkgelenk 38,38' an ihren Außenrändern schwenkbar befestigt ist. In jedem der beiden Schwenkgelenke 38, 38' ist eine Feder 39,39' vorgesehen, welche die Klaue 30 von der Basis 45 fort, also nach oben spannt. Mit der Basis 45 wird das Riegelelement 22 mittels Befestigungsbolzen 44 auf den Frachtraumboden in dort vorgesehenen Befestigungseinrichtungen angebracht.

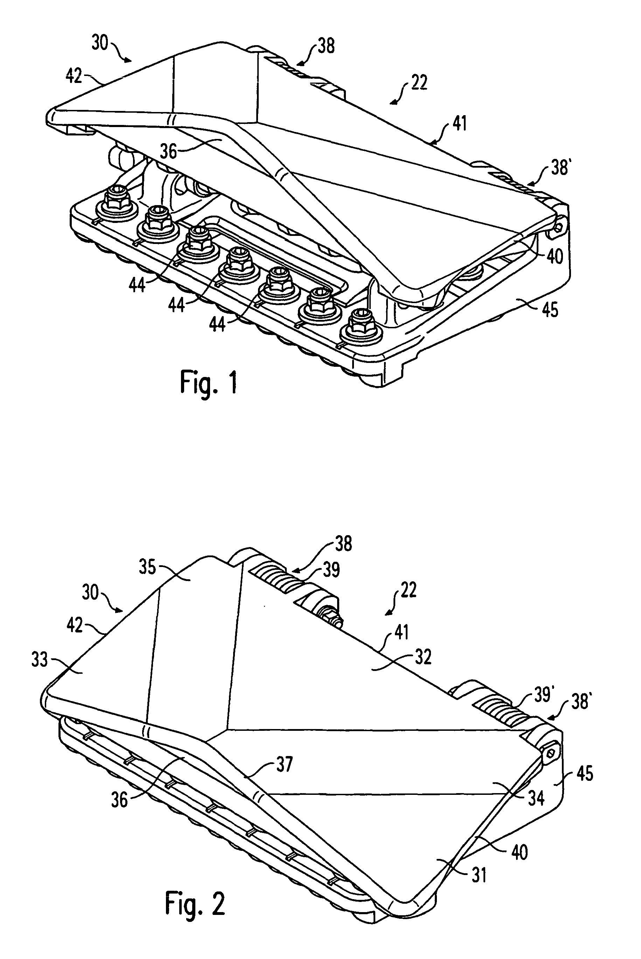

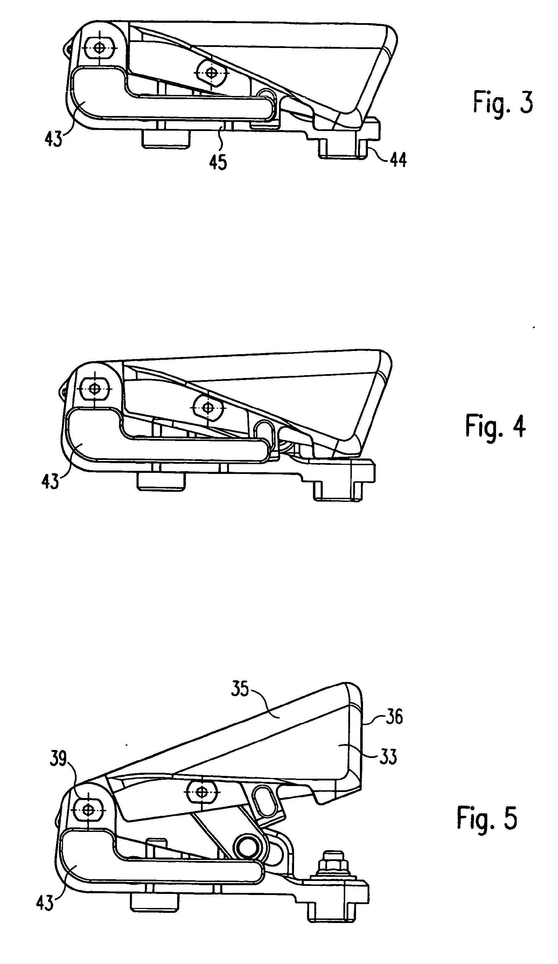

Die Klaue weist eine Eingriffsfläche 36 auf, die - wie insbesondere aus Figur 5 zu ersehen - im wesentlichen senkrecht zur Basis 45 und damit zum Boden des Frachtraums in der angehobenen Betriebsstellung (gemäß Figur 2 und Figur 5) ragt. Von den die Klaue 30 mit ihrer in der Draufsicht im wesentlichen rechteckigen Kontur umschreibenden Außenrändern 40, 41 und 42 ausgehend steigen Schrägflächen 31 (eine Rampe mit 90° zur Eingriffsfläche bildend), 32 (eine Rampe mit 180° zur Eingriffsfläche bildend), 33 (eine Rampe mit 270° zur Eingriffsfläche bildend) und 34 (eine Rampe mit 135° zur Eingriffsfläche bildend) an. Die (sich an sich ergebenden) Kanten zwischen den Schrägflachen 31 und 32 sowie 32 und 33 sind so stark angefast, dass sie weitere Schrägflächen 34 (mit 135° zur Eingriffsfläche) und 35 (mit 315° zur Eingriffsfläche) bilden. Alle Schrägflächen 31 bis 35 treffen sich im wesentlichen in der Mitte der Oberkante 37 der Eingriffsfläche 36. Durch diese sehr einfach herzustellende Form ist gewährleistet, dass die Klaue 30 immer dann abgesenkt wird, wenn ein Frachtstück aus einer Richtung auf sie auffährt, die nicht im wesentlichen senkrecht zur Eingriffsfläche 36 verläuft. Es kann damit im Bereich der Tür 12 des Frachtraums (siehe Figur 6) eine Absicherung gegen ein unbeabsichtigtes Herauslaufen eines Frachtstückes aus dem Frachtraum geschaffen werden.

Um nun ein Ausladen von Containern zu ermöglichen, ist das Riegelelement mit einem Sperrhebel 43 versehen, der einen Klinkenmechanismus aufweist; welcher mit einem (nicht gezeigten) Raststift an der Klaue 30 in Eingriff gelangen kann und zwar dann, wenn die Klaue aus ihrer Betriebsstellung (Figur 5) über die abgesenkte Stellung (Figur 4) hinaus noch tiefer nach unten gedrückt wird, wie dies in Figur 3 gezeigt ist. In dieser tiefsten Stellung schnappt der Sperrhebel 43 ein und verriegelt die Klaue 30 in dieser Position, sodass dann die Frachtstücke aus dem Frachtraum entladen werden können.

### Bezugszeichenliste

- 10: Container/Frachtstück
- 12: Tür
- 14: Kugelmatte
- 18: Rollenantriebseinheit
- 20: Containerrand
- 22: Riegelelement
- 30: Klaue
- 31: 90° Rampe
- 32: 180° Rampe
- 33: 270° Rampe
- 34: 135° Rampe
- 35: 315° Rampe
- 36: Eingriffsflache
- 37: Oberkante
- 38,38': Schwenkgelenk
- 39,39': Feder
- 40-42: Außenrand
- 43: Sperrhebel
- 44: Befestigungsbolzen
- 45: Basis

## Patentansprüche

1. Riegelelement als Bestandteil eines Beladungssystems im Frachtraum eines Flugzeugs, das Rollen- und Kugeleinheiten umfasst, die in/an einem Boden des Frachtraums so befestigt sind, dass Container, Paletten oder dergleichen Frachtstücke (10) durch eine Tür (12) des Frachtraums in diesen hineingefahren und an bestimmten Positionen im Frachtraum verankert werden können, wobei das Riegelelement (22) eine Klaue (30) umfasst, die aus einer erhobenen Betriebsstellung, in welcher die Frachtstücke (10) mit der Klaue (30) in sperrenden Eingriff gelangen können, in eine Ruhestellung, in der ein Frachtstück (10) das Riegelelement (22) überfahren kann, durch Rampen, Hebel oder dergleichen mechanischen Betätigungseinrichtungen (31 - 35) bei einem Anfahren des Frachtstücks (22) absenkbar ist, wobei das Riegelelement (22) derart im Bereich der Tür (12) befestigbar ist, dass beim Anfahren des Frachtstücks (10) aus einer Richtung aus dem Frachtraum durch die Tür (12) die Klaue (30) in der Betriebsstellung verbleibt,
**dadurch gekennzeichnet, dass**
die Betätigungseinrichtungen (31 - 35) derart an der Klaue angeordnet sind, dass die Klaue (30) ausschließlich beim Anfahren des Frachtstücks (10) aus der Richtung aus dem Frachtraum durch die Tür (12) hinaus in der Betriebsstellung verbleibt, beim Anfahren aus allen anderen Richtungen jedoch in die Ruhestellung abgesenkt wird.

2. Riegelelement nach Anspruch 1,
**dadurch gekennzeichnet, dass**
die Klaue(30) eine Eingriffsfläche (36) und dieser gegenüberliegend ein Schwenkgelenk (38,38') derart umfasst, dass die Eingriffsflächen (36) im wesentlichen Tangential zum Schwenkgelenk (38,38') von der Betriebsstellung in die Ruhestellung entgegen der Kraft einer Feder (39,39') absenkbar ist.

3. Riegelelement nach Anspruch 2,
**dadurch gekennzeichnet, dass**
die Klaue (30) in der Draufsicht eine im wesentlichen rechteckige Kontur mit Schrägflächen (31-35) aufweist, die in Richtung auf einen Mittenbereich einer Oberkante (37) der Eingriffsfläche (36) von ihren Außenrändern (40-42) her ansteigens.

4. Riegelelement nach einem der vorhergehenden Ansprüche,
**dadurch gekennzeichnet, dass**
das Riegelelement (22) einen Sperrmechanismus (43) umfasst zum Halten der Klaue (30), in einer Position, die mindestens so tief ist wie die Ruhestellung.

5. Riegelelement nach einem der vorhergehenden Ansprüche, insbesondere nach Anspruch 4,
**dadurch gekennzeichnet, dass**
der Sperrmechanismus (43) derart ausgebildet und das Riegelelement (22) derart auf dem Frachtraumboden anbringbar ist, dass die Kralle (30) dann mit dem Sperrmechanismus (43) in Eingriff gelangt und von diesem bis zu einem Entriegeln des Sperrmechanismus (43) gehalten wird, wenn die Kralle (30) um einen vorbestimmten Betrag von der Betriebsstellung ausgehend tiefer als bis zur Ruhestellung gedrückt wird.

6. Verwendung eines Riegelelementes, insbesondere eines Riegelelementes nach einem der vorhergehenden Ansprüche, in einem Beladungssystem im Frachtraum eines Flugzeugs, in welchem Container, Paletten oder dergleichen Frachtstücke durch eine Tür des Frachtraumes in diesen auf einem Frachtraumboden hineingefahren werden können, wobei das Riegelelement eine durch Rampen, Hebel oder dergleichen Betätigungseinrichtungen derart betätigbare Klaue umfasst, dass diese aus einer erhobenen Betriebsstellung, in welcher die Frachtstücke mit der Klaue in sperrenden Eingriff gelangen können, in eine Ruhestellung, in der ein Frachtstück das Riegelelement überfahren kann, absenkbar ist, wobei die Betätigungseinrichtungen derart ausgebildet und das Riegelelement derart im Bereich der Tür befestigt ist, dass beim Anfahren des Frachtstücks aus einer Richtung aus dem Frachtraum durch die Tür die Klaue in der Betriebsstellung verbleibt, beim Anfahren aus allen anderen Richtungen in die Ruhestellung abgesenkt wird.

## Claims

1. Latching element as one component of a loading system in the cargo hold of an aircraft that comprises roller and ball elements that are so mounted in/on a floor of the cargo hold that containers, pallets or similar items of freight (10) can be transported through a door (12) of the cargo hold into the latter and be anchored to specific positions, wherein the latching element (22) comprises a claw (30), which can be lowered by means of ramps, levers or similar mechanical actuating devices (31-35) with the approach of an item of freight (10), from a raised operating position, in which the item of freight (10) can achieve locking engagement with the claw (30), into a resting position, in which an item of freight (10) can travel over the latching element (22), wherein the latching element (22) is mounted in the area of the door (12) in such a way that, when the item of freight (10) approaches through the door from a direction out of the cargo hold, the claw remains in the operating position,
**characterised in that**
the actuating devices (31-35) are so arranged on the claw that the claw (30) only remains in the operating position when the item of freight (10) approaches through the door (12) from the direction out of the cargo hold, whereas it is lowered into the resting position on approach from all other directions.

2. Latching element according to Claim 1,
**characterised in that**
the claw (30) comprises an engagement surface (36) and an opposed hinge joint (38, 38') such that the engagement surface (36) can be lowered substantially tangentially to the hinge joint (38, 38') from the operating position into the resting position against the force of a spring (39, 39').

3. Latching element according to Claim 2,
**characterised in that**
the claw (30) in the plan view has a substantially rectangular contour with sloping surfaces (31-35), which ascend from their outer edges (40-42) in the direction of a central area of an upper edge (37) of the engagement surface (36).

4. Latching element according to one of the previous claims,
**characterised in that**
the latching element (22) comprises a locking mechanism (43) for holding the claw (30) in a position that is at least as deep as the resting position.

5. Latching element according to one of the previous claims, in particular Claim 4,
**characterised in that**
the locking mechanism (43) is configured in such a way and the latching element (22) can be affixed to the cargo hold floor in such a way that the claw (30) engages with the locking mechanism (43) and is held by the latter until the locking mechanism (43) is released whenever the claw (30) is depressed out of the operating position by a predefined amount lower than the resting position.

6. Use of a latching element, in particular a latching element according to one of the previous claims, in a loading system in the cargo hold of an aircraft, in which containers, pallets or similar items of freight can be transported through a door of the cargo hold into the latter on a cargo hold floor, wherein the latching element comprises a claw that can be actuated by means of ramps, levers or similar actuating devices in such a way that this can be lowered from a raised operating position, in which the items of freight can achieve locking engagement with the claw, into a resting position, in which an item of freight can travel over the latching element, wherein the actuating devices are configured in such a way and the latching element is mounted in the area of the door in such a way that, when the item of freight approaches through the door from a direction out of the cargo hold, the claw remains in the operating position, whereas it is lowered into the resting position on approach from all other directions.

## Revendications

1. Elément de verrouillage en tant qu'élément d'un système de chargement dans la soute d'un avion, qui comprend des unités à rouleaux et à billes, qui sont fixées dans/sur un plancher de la soute de sorte que des containers, palettes ou colis similaires (10) puissent être introduits par une porte (12) de la soute dans celle-ci et être ancrés à certains endroits dans la soute, l'élément de verrouillage (22) comportant une mâchoire (30), qui peut être abaissée lors de l'approche du colis (22) par des rampes, leviers ou dispositifs d'actionnement mécaniques similaires (31 - 35) d'une position de service élevée, dans laquelle les colis (10) peuvent entrer en prise bloquante avec la mâchoire (30), à une position de repos, dans laquelle un colis (10) peut franchir l'élément de verrouillage (22), l'élément de verrouillage (22) pouvant être fixé dans la zone de la porte (12) de sorte que lors de l'approche du colis (10) depuis une direction provenant de la soute par la porte (12), la mâchoire (30) reste dans la position de service,
**caractérisé en ce que**
les dispositifs d'actionnements (31 - 35) sont disposés au niveau de la mâchoire de sorte que la mâchoire (30) reste exclusivement dans la position de service lors de l'approche du colis (10) depuis la direction provenant de la soute par la porte (12), mais est abaissée dans la position de repos lors de l'approche depuis toutes les autres directions.

2. Elément de verrouillage selon la revendication 1,
**caractérisé en ce que**,
la mâchoire (30) comprend une surface de prise (36) et une articulation de pivotement (38, 38') lui faisant face de sorte que la surface de prise (36) peut être abaissée essentiellement de manière tangentielle à l'articulation de pivotement (38, 38') de la position de service à la position de repos à l'encontre de l'action de la force d'un ressort (39, 39').

3. Elément de verrouillage selon la revendication 2,
**caractérisé en ce que**,
la mâchoire (30) présente dans la vue en élévation un contour essentiellement rectangulaire avec des surfaces obliques (31 - 35), qui montent en direction d'une zone médiane d'un bord supérieur (37) de la surface de prise (36) depuis ses bords extérieurs (40 - 42).

4. Elément de verrouillage selon l'une quelconque des revendications précédentes,
**caractérisé en ce que**,
l'élément de verrouillage (22) comprend un mécanisme de blocage (43) permettant de retenir la mâchoire (30), dans une position, qui est au moins aussi basse que la position de repos.

5. Elément de verrouillage selon l'une quelconque des revendications précédentes, en particulier selon la revendication 4,
**caractérisé en ce que**,
le mécanisme de blocage (43) est réalisé et l'élément de verrouillage (22) peut être appliqué sur le plancher de la soute de telle sorte que la griffe (30) arrive alors en prise avec le mécanisme de blocage (43) et est maintenue par celui-ci jusqu'au déverrouillage du mécanisme de blocage (43) lorsque la griffe (30) est enfoncée plus bas que la position de repos d'une valeur prédéfinie en partant de la position de service.

6. Utilisation d'un élément de verrouillage, en particulier d'un élément de verrouillage selon l'une quelconque des revendications précédentes, dans un système de chargement dans la soute d'un avion, dans lequel des containers, palettes ou colis similaires peuvent être introduits par une porte de la soute dans celle-ci sur le plancher de la soute, dans lequel l'élément de verrouillage comprend une mâchoire pouvant être actionnée par des rampes, leviers ou dispositifs d'actionnement similaires de sorte que celle-ci peut être abaissée d'une position de service élevée, dans laquelle les colis peuvent entrer en prise bloquante avec la pince, à une position de repos, dans laquelle un colis peut franchir l'élément de verrouillage, dans lequel les dispositifs d'actionnement sont réalisés et l'élément de verrouillage fixé dans la zone de la porte de telle sorte que lors de l'approche du colis depuis la direction provenant de la soute par la porte, la mâchoire reste dans la position de service, et que lors de l'approche depuis toutes les autres directions, elle est abaissée dans la position de repos.
